# EUROPEAN PATENT APPLICATION

(11) **EP 4 811 065 A1**
(43) Date of publication of application: **23.09.2026**
(21) Application number: 26163521.3
(22) Date of filing: 10.03.2026
(51) Int. Cl.: G05D 1/225, G05D 1/249, G05D 1/633

(54) **CONTROL SYSTEM AND CONTROL METHOD**

(30) Priority: 19.03.2025 JP 2025044336
(71) Applicant: Toyota Jidosha Kabushiki Kaisha, Toyota-shi, Aichi-ken 471-8571 (JP)
(72) Inventor: IWAHORI, Kento, Toyota-shi, 471-8571 (JP); KAKUMA, Daisuke, Toyota-shi, 471-8571 (JP)
(74) Representative: D Young & Co LLP

(57) **Abstract**

In a control system, a first generation unit uses a position and an orientation of a moving object to generate a first candidate, the position and the orientation being acquired in a predetermined first acquisition method by using a first sensor. The second generation unit uses the position and the orientation to generate a second candidate, the position and the orientation being acquired in a predetermined second acquisition method by using a second sensor. The determination unit determines an overlapping range between the first candidate and the second candidate as the driving permissible range. The first/second generation units satisfy at least one of a first condition and a second condition. The first condition is a condition that the first sensor and the second sensor are different sensors. The second condition is a condition that the first acquisition method and the second acquisition method are different acquisition methods.

## Description

### BACKGROUND

### FIELD

The present disclosure relates to a control system and a control method.

### RELATED ART

Conventionally, a technique is known in which a posture of a vehicle is generated for each detection result of a plurality of sensors, and reliability of the sensors is determined by comparing the generated results (Japanese Unexamined Patent Application Publication No. 2018-44880). In this technology, a posture of the vehicle generated by using an image captured by a camera and a posture of the vehicle generated by using a measurement result of a gyroscope are compared. Then, when the generated results do not have a significant difference, the gyroscope is determined to be functioning normally.

When a moving object such as a vehicle continues moving toward another object, the moving object may come into contact with the another object. Therefore, a driving permissible range permitted for the moving object to move without coming into contact with another object is determined in advance, and the moving object is stopped in a case of deviation from the determined driving permissible range. This allows the moving object to be prevented from coming into contact with another object while a delay in movement of the moving object is suppressed to the minimum. In determining a driving permissible range by acquiring positions and orientations of the moving object with a plurality of sensors, a technology capable of simply determining a highly reliable driving permissible range is desired. Such a problem is applicable to the case of acquiring positions and orientations of the moving object not only with a plurality of sensors but also with a plurality of different acquisition methods to determine a driving permissible range.

### SUMMARY

The present disclosure is achievable as the following aspects.
(1) According to one aspect of the present disclosure, a control system is provided. A control system that controls a moving object capable of moving by unmanned driving includes a first generation unit, a second generation unit, and a determination unit. The first generation unit uses a position and an orientation of the moving object to generate a first candidate for a driving permissible range permitted for the moving object to move without coming into contact with another object. The position and the orientation used by the first generation unit are acquired in a predetermined first acquisition method by using a detection result of a first sensor. The second generation unit uses the position and the orientation of the moving object to generate a second candidate for the driving permissible range. The position and the orientation used by the second generation unit are acquired in a predetermined second acquisition method by using a detection result of a second sensor. The determination unit determines an overlapping range between the first candidate and the second candidate as the driving permissible range and transmits the determined driving permissible range to a control unit of the moving object. The first generation unit and the second generation unit satisfy at least one of a first condition and a second condition. The first condition is a condition that the first sensor and the second sensor are different sensors. The second condition is a condition that the first acquisition method and the second acquisition method are different acquisition methods. According to this aspect, the overlapping range between the first candidate and the second candidate is determined as the driving permissible range, so that a narrowest range that may be determined by using the positions and the orientations of the moving object acquired by the respective sensors or the respective acquisition methods can be determined as the driving permissible range. Further, the driving permissible range can be determined without comparing the positions and the orientations of the moving object acquired by the respective sensors or the respective acquisition methods or setting a threshold for determining reliability of each sensor or each acquisition method. Therefore, the highly reliable driving permissible range can simply be determined.
(2) In the above-described aspect, the first generation unit and the second generation unit may be configured to satisfy both of the first condition and the second condition. According to this aspect, a larger difference in the acquisition condition of the position and orientation of the moving object makes a difference in the acquired position and orientation of the moving object more likely to occur and a difference between the first candidate and the second candidate more likely to increase. Since the driving permissible range is determined to be the overlapping range between the first candidate and the second candidate, as the difference between the first candidate and the second candidate increases, it is possible to determine the driving permissible range that is a narrower range. Thereby, the more highly reliable driving permissible range can simply be determined.
(3) In the above-described aspect, the driving permissible range may be defined by at least one of parameters including a steering angle of the moving object at which movement is permitted, a moving speed of the moving object at which the movement is permitted, and a grace period for which the moving object is permitted to continue the movement. Each of the first generation unit and the second generation unit may generate a candidate for each of the at least one of the parameters. The determination unit may identify the overlapping range for each of the at least one of the parameters and determine the identified overlapping range as the driving permissible range. According to this aspect, the driving permissible range can be defined by at least one of the steering angle of the moving object, the moving speed of the moving object, and the grace period related to movement of the moving object. Further, according to this aspect, a narrowest range can be adopted for each parameter to determine the driving permissible range even if maximum values at which movement is permitted are different between the first candidate and the second candidate for each parameter. Therefore, the more highly reliable driving permissible range can simply be determined.
(4) In the above-described aspect, the driving permissible range may be further defined by a traveling category of the moving object. The traveling category may indicate forward movement or rearward movement. According to this aspect, the driving permissible range in accordance with the traveling category of the moving object can be determined.
(5) The above-described aspect may further include a detection unit and a memory. The detection unit may detect that another moving object as the another object has approached the moving object. The memory may store a map indicating a movable area of the moving object. The movable area may be defined in accordance with a stationary object as the another object. When the detection unit does not detect that the another moving object has approached the moving object, each of the first generation unit and the second generation unit may generate the candidate for the steering angle in accordance with a relative position and a distance between the moving object and the stationary object. The relative position and the distance may be calculated by using the map. When the detection unit detects that the another moving object has approached the moving object, each of the first generation unit and the second generation unit may generate the candidate for the steering angle in accordance with the relative position and the distance between the moving object and the stationary object which are calculated by using the map, and a relative position and a distance between the moving object and the another moving object which are calculated by using a detection result of a sensor, the first generation unit using the first sensor as the sensor, the second generation unit using the second sensor as the sensor. According to this aspect, the relative position and the distance between the moving object and the stationary object can be calculated without detecting the stationary object each time by the sensor. Accordingly, the candidate for the steering angle of the moving object can easily be generated. In addition, when the another moving object has approached the moving object, the candidate for the steering angle of the moving object can be generated in consideration of presence of not only the stationary object but also the another moving object. Therefore, the highly reliable driving permissible range in accordance with a change in the surrounding environment of the moving object can flexibly be determined.
(6) The above-described aspect may further include a detection unit and a memory. The detection unit may detect that another moving object as the another object has approached the moving object. The memory may store a map indicating a default value of the moving speed in each area in a movable area of the moving object. The movable area may be defined in accordance with a stationary object as the another object. When the detection unit does not detect that the another moving object has approached the moving object, each of the first generation unit and the second generation unit may generate the candidate for the moving speed in which the default value acquired by using the map is a maximum value, and generate time in accordance with the default value as the candidate for the grace period. When the detection unit detects that the another moving object has approached the moving object, each of the first generation unit and the second generation unit may generate the candidate for the moving speed in which a variable value in accordance with a distance between the moving object and the another moving object is a maximum value, the distance being calculated by using a detection result of a sensor, and generate time in accordance with the variable value as the candidate for the grace period, the first generation unit using the first sensor as the sensor, the second generation unit using the second sensor as the sensor. According to this aspect, the candidate for the moving speed of the moving object and the candidate for the grace period related to movement of the moving object can easily be generated by using the default value of the moving speed in accordance with the position of the moving object without detecting the stationary object each time by the sensor. In addition, when the another moving object has approached the moving object, the candidate for the moving speed of the moving object and the candidate for the grace period related to movement of the moving object can be generated in consideration of presence of not only the stationary object but also the another moving object. Therefore, the highly reliable driving permissible range in accordance with a change in the surrounding environment of the moving object can flexibly be determined. Furthermore, when the another moving object has approached the moving object, the candidate for the moving speed of the moving object and the candidate for the grace period related to movement of the moving object can be generated by using the variable value in accordance with the distance between the moving object and the another moving object. Therefore, while safety is secured when the moving object moves near the another moving object, a possibility of stagnation in moving of the moving object can be reduced.
(7) In the above-described aspect, each of the first generation unit and the second generation unit may further generate the candidate for at least one of the steering angle, the moving speed, and the grace period in accordance with a size of the moving object. According to this aspect, a more accurate candidate for the steering angle, the moving speed, and/or the grace period in accordance with the size of the moving object can be generated. Accordingly, the more accurate candidate can be used to determine the driving permissible range, and thereby the more highly reliable driving permissible range can simply be determined.
(8) In the above-described aspect, each of the first generation unit and the second generation unit may generate the candidate for the traveling category in accordance with a shift position of the moving object. According to this aspect, the shift position of the moving object can be acquired to easily generate the candidate for the traveling category of the moving object.
(9) The above-described aspect may further include a confirmation unit. The confirmation unit may confirm that the driving permissible range transmitted from the determination unit matches the driving permissible range received by the control unit. According to this aspect, it can be confirmed that the driving permissible range has correctly transmitted from the determination unit and received by the control unit of the moving object. Accordingly, reliability of the driving permissible range can be ensured.
(10) According to another aspect of the present disclosure, a control method is provided. A method for controlling a moving object capable of moving by unmanned driving includes a first generation step, a second generation step, and a determination step. In the first generation step, a position and an orientation of the moving object are used to generate a first candidate for a driving permissible range permitted for the moving object to move without coming into contact with another object. The position and the orientation used in the first generation step are acquired in a predetermined first acquisition method by using a detection result of a first sensor. In the second generation step, the position and the orientation of the moving object are used to generate a second candidate for the driving permissible range. The position and the orientation used in the second generation step are acquired in a predetermined second acquisition method by using a detection result of a second sensor. In the determination step, an overlapping range between the first candidate and the second candidate is determined as the driving permissible range and the determined driving permissible range is transmitted to a control unit of the moving object. In the first generation step and the second generation step, at least one of a first condition and a second condition is satisfied. The first condition is a condition that the first sensor and the second sensor are different sensors. The second condition is a condition that the first acquisition method and the second acquisition method are different acquisition methods. According to this aspect, the overlapping range between the first candidate and the second candidate is determined as the driving permissible range, so that a narrowest range that may be determined by using the positions and the orientations of the moving object acquired by the respective sensors or the respective acquisition methods can be determined as the driving permissible range. Further, the driving permissible range can be determined without comparing the positions and the orientations of the moving object acquired by the respective sensors or the respective acquisition methods or setting a threshold for determining reliability of each sensor or each acquisition method. Therefore, the highly reliable driving permissible range can simply be determined.

The present disclosure can be implemented in a variety of aspects other than the control system and the control method described above. For example, the present disclosure can be implemented in aspects, such as a server and a moving object that can implement at least part of a function of the control system, a method for manufacturing the control system, a computer program to implement the control method, and a non-transitory recording medium recording the computer program.

### BRIEF DESCRIPTION OF THE DRAWINGS

Fig. 1 is a conceptual diagram illustrating a configuration of a control system according to a first embodiment;
Fig. 2 is a block diagram illustrating a configuration of the control system according to the first embodiment;
Fig. 3 is a conceptual diagram illustrating a method for controlling a vehicle according to the first embodiment;
Fig. 4 is a flowchart illustrating a procedure of running control of the vehicle according to the first embodiment;
Fig. 5 is a flowchart illustrating a procedure of determining a driving permissible range according to the first embodiment;
Fig. 6 is a table illustrating an example of candidates for parameters and a driving permissible range in accordance with these candidates;
Fig. 7 is a first conceptual diagram illustrating a method for generating a candidate for each parameter in accordance with a surrounding environment of a vehicle;
Fig. 8 is a second conceptual diagram illustrating a method for generating a candidate for each parameter in accordance with a surrounding environment of a vehicle;
Fig. 9 is a third conceptual diagram illustrating a method for generating a candidate for each parameter in accordance with a surrounding environment of a vehicle;
Fig. 10 is a fourth conceptual diagram illustrating a method for generating a candidate for each parameter in accordance with a surrounding environment of a vehicle;
Fig. 11 is a fifth conceptual diagram illustrating a method for generating a candidate for each parameter in accordance with a surrounding environment of a vehicle;
Fig. 12 is a flowchart illustrating a procedure of stopping control of the vehicle according to the first embodiment;
Fig. 13 is an explanatory diagram illustrating a schematic configuration of a control system according to a second embodiment; and
Fig. 14 is a flowchart illustrating a procedure of running control of a vehicle according to the second embodiment.

### DETAILED DESCRIPTION

### A. First Embodiment

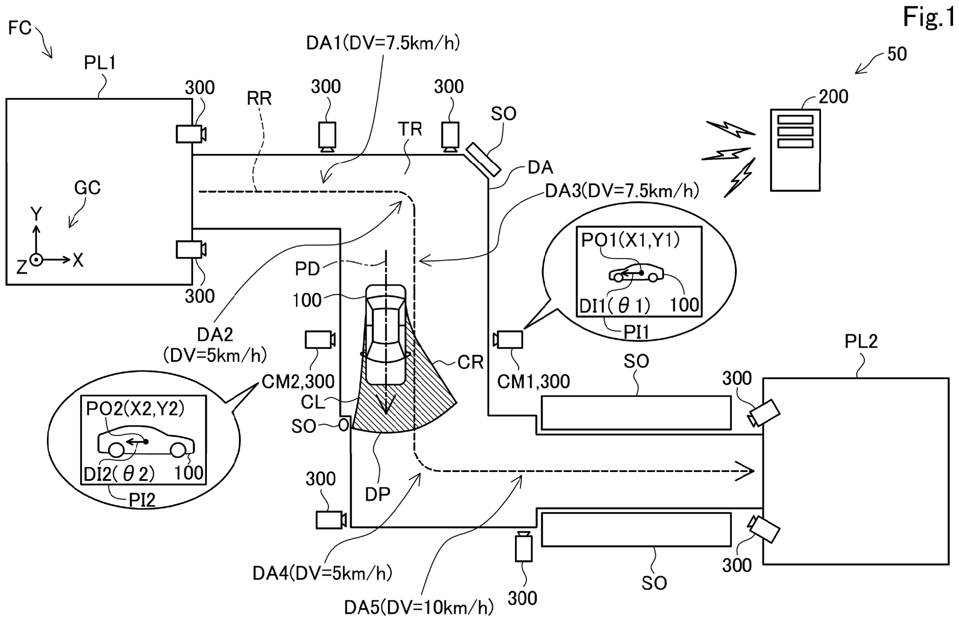

Fig. 1 is a conceptual diagram illustrating a configuration of a control system 50 according to a first embodiment. The control system 50 includes one or more vehicles 100 as a moving object, a server 200, and one or more external sensors 300 as a sensor.

In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a truck, a bus, a two-wheel vehicle, a four-wheel vehicle, or a construction vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

In this embodiment, the control system 50 is used in a factory FC where the vehicle 100 is produced. A reference coordinate system in the factory FC is a global coordinate system GC. Any position in the factory FC can be represented by X, Y, and Z coordinates in the global coordinate system GC. The factory FC includes a first place PL1 and a second place PL2. A track TR on which the vehicle 100 can run connects the first place PL1 and the second place PL2. The vehicle 100 moves from the first place PL1 to the second place PL2 through the track TR by unmanned driving.

In the factory FC, a plurality of external sensors 300 are disposed along the track TR. A position of each external sensor 300 in the factory FC is adjusted in advance. The external sensor 300 is a sensor positioned outside of the vehicle 100. The external sensor 300 in this embodiment is a sensor that captures the vehicle 100 from the outside of the vehicle 100. The external sensor 300 includes a communication device (not illustrated) and can communicate with another device, such as the server 200, by wired or wireless communication. Specifically, the external sensor 300 is configured by a camera. The camera as the external sensor 300 captures the vehicle 100 and outputs a captured image as a detection result.

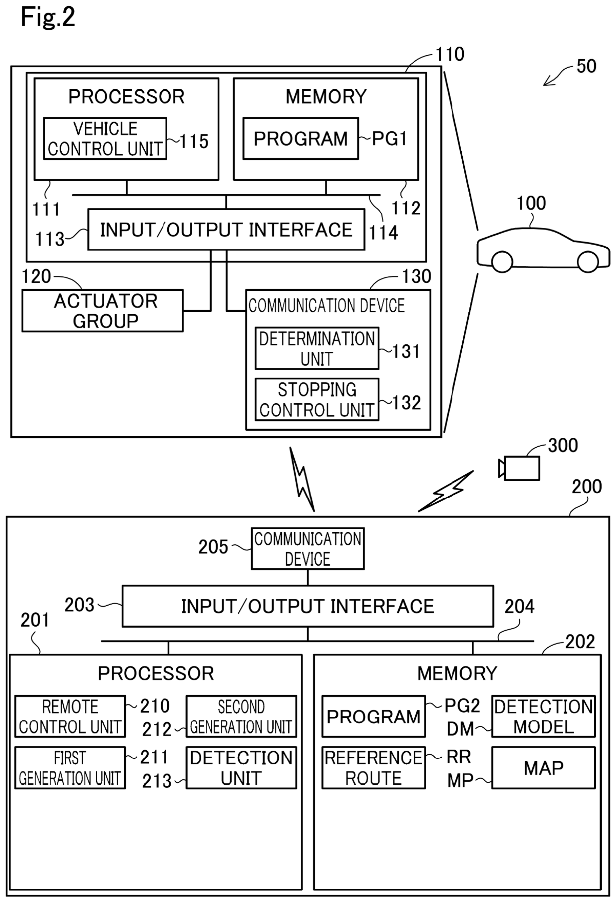

Fig. 2 is a block diagram illustrating a configuration of the control system 50 according to the first embodiment. The server 200 includes a computer including a processor 201, a memory 202, an input/output interface 203, and an internal bus 204. The processor 201, the memory 202, and the input/output interface 203 are coupled via the internal bus 204 in a bidirectionally communicable manner. A communication device 205 to communicate with various devices located outside of the server 200 is coupled to the input/output interface 203. The communication device 205 can communicate with the vehicle 100 by wireless communication, and can communicate with each external sensor 300 by wired or wireless communication. The processor 201 executes a program PG2 stored in the memory 202, thus implementing various functions including functions as a remote control unit 210, a first generation unit 211, a second generation unit 212, and a detection unit 213.

The remote control unit 210 acquires a detection result of the sensor and uses the detection result to generate a running control signal to control an actuator group 120 of the vehicle 100. The remote control unit 210 then transmits the running control signal to the vehicle 100 to cause the vehicle 100 to run by remote control. The remote control unit 210 may generate and output not only the running control signal but also control signals to control, for example, actuators that operate various auxiliary machines and various types of equipment including a wiper, a power window, and a light provided to the vehicle 100. That is, the remote control unit 210 may operate such various types of equipment and various auxiliary machines by remote control.

Each of the first generation unit 211 and the second generation unit 212 executes pre-processing to determine a driving permissible range DP. The driving permissible range DP is a range of a running state of the vehicle 100 in which the vehicle 100 is permitted to run without coming into contact with another object. The driving permissible range DP is defined by a parameter indicating the running state of the vehicle 100. A relative position and a distance between the vehicle 100 and another object vary depending on a position and an orientation of the vehicle 100. Therefore, the driving permissible range DP varies depending on the position and the orientation of the vehicle 100. Thus, each of the first generation unit 211 and the second generation unit 212 generates a candidate for a parameter corresponding to the position and the orientation of the vehicle 100. Specifically, the first generation unit 211 uses a position and an orientation of the vehicle 100 acquired in a predetermined first acquisition method by using a detection result of a first sensor to generate the candidate for the parameter that defines the driving permissible range DP. The second generation unit 212 uses the position and the orientation of the vehicle 100 acquired in a predetermined second acquisition method by using a detection result of a second sensor to generate a second candidate for the parameter that defines the driving permissible range DP. Here, in this embodiment, the sensors as acquisition sources of the detection results used to acquire the positions and the orientations of the vehicle 100 are installed at different places between the first generation unit 211 and the second generation unit 212. That is, the sensors as the acquisition sources of the detection results used to acquire the positions and the orientations of the vehicle 100 are of the same type between the first generation unit 211 and the second generation unit 212, and both of them are cameras as the external sensors 300. Moreover, the first generation unit 211 and the second generation unit 212 adopt the same method to acquire the positions and the orientations of the vehicle 100, and both of them adopt a method of detecting an outer shape of the vehicle 100 from the captured image by using a detection model DM described later. Each of the first generation unit 211 and the second generation unit 212 transmits the generated candidate for the parameter to a determination unit 131.

The detection unit 213 detects that another moving object MO as another object capable of moving has approached the vehicle 100. For example, the detection unit 213 uses the detection result of the external sensor 300 to detect the another moving object MO present around the vehicle 100, and thereby detects that the another moving object MO has approached the vehicle 100.

The vehicle 100 includes a vehicle control device 110 to control each unit of the vehicle 100, the actuator group 120 including one or more actuators that perform driving under control of the vehicle control device 110, and a communication device 130 to communicate with an external device, such as the server 200, by wireless communication. The actuator group 120 includes an actuator of a driving device for accelerating the vehicle 100, an actuator of a steering device for changing a traveling orientation of the vehicle 100, and an actuator of a braking device for decelerating the vehicle 100.

The communication device 130 can communicate with an external device, such as the server 200, by wireless communication, and can communicate with the vehicle control device 110 by wired communication. Further, in this embodiment, the communication device 130 also functions as the determination unit 131 and a stopping control unit 132.

The determination unit 131 determines an overlapping range between a first candidate and a second candidate as the driving permissible range DP. The first candidate is the candidate for the parameter received from the first generation unit 211. The second candidate is the candidate for the parameter received from the second generation unit 212. The determination unit 131 transmits the determined driving permissible range DP to the stopping control unit 132.

In a case in which the running state of the vehicle 100 deviates from the driving permissible range DP received from the determination unit 131, the stopping control unit 132 determines that continuation of running of the vehicle 100 causes the vehicle 100 to come into contact with another object, and stops the vehicle 100. When the stopping control unit 132 stops the vehicle 100, the stopping control unit 132 generates a stopping signal to stop the vehicle 100 and transmits the stopping signal to the vehicle control device 110, and thereby stops the vehicle 100.

The vehicle control device 110 includes a computer including a processor 111, a memory 112, an input/output interface 113, and an internal bus 114. The processor 111, the memory 112, and the input/output interface 113 are coupled via the internal bus 114 in a bidirectionally communicable manner. The actuator group 120 and the communication device 130 are coupled to the input/output interface 113. The processor 111 executes a program PG1 stored in the memory 112, thus implementing various functions including a function as a vehicle control unit 115.

The vehicle control unit 115 controls the actuator group 120 to cause the vehicle 100 to run. The vehicle control unit 115 can cause the vehicle 100 to run by controlling the actuator group 120 using the running control signal received from the server 200. The running control signal is a control signal to cause the vehicle 100 to run. In this embodiment, the running control signal includes, as parameters, acceleration and a steering angle of the vehicle 100. In other embodiments, the running control signal may include, alternative to or in addition to the acceleration of the vehicle 100, speed of the vehicle 100 as a parameter. Further, when the vehicle control unit 115 receives the stopping signal from the stopping control unit 132, the vehicle control unit 115 uses the stopping signal to control the actuator group 120, and thereby stops the vehicle 100.

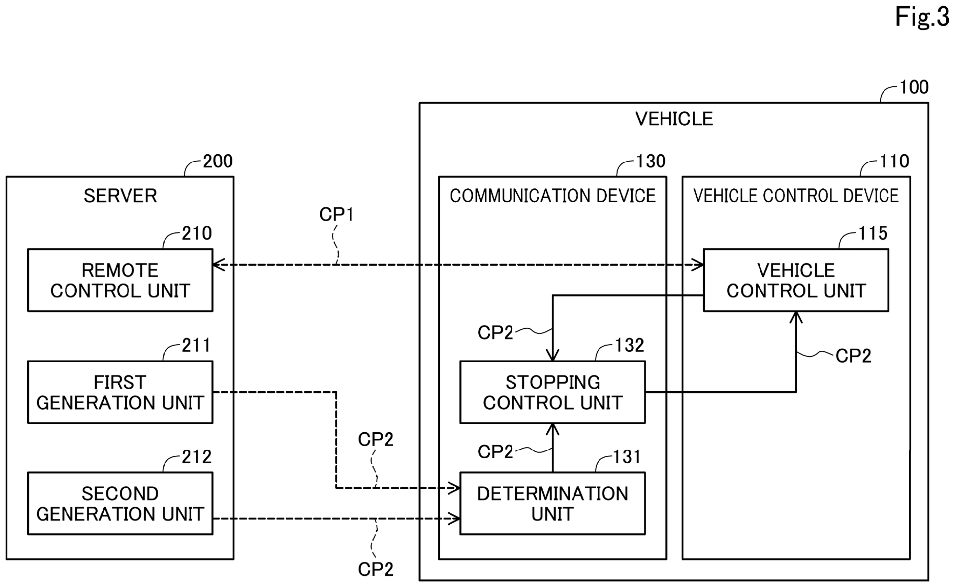

Fig. 3 is a conceptual diagram illustrating a method for controlling the vehicle 100 according to the first embodiment. Running control of the vehicle 100 using the running control signal and stopping control of the vehicle 100 using the driving permissible range DP are performed via different communication paths CP1 and CP2. The first communication path CP1 can transfer more information than the second communication path CP2. On the other hand, the second communication path CP2 restricts an amount of information to be transferred as compared with the first communication path CP1, and thereby functions as a communication path with higher reliability. Note that in Fig. 3 a wireless communication section is indicated by a broken line and a wired communication section is indicated by a solid line in the communication paths CP1 and CP2.

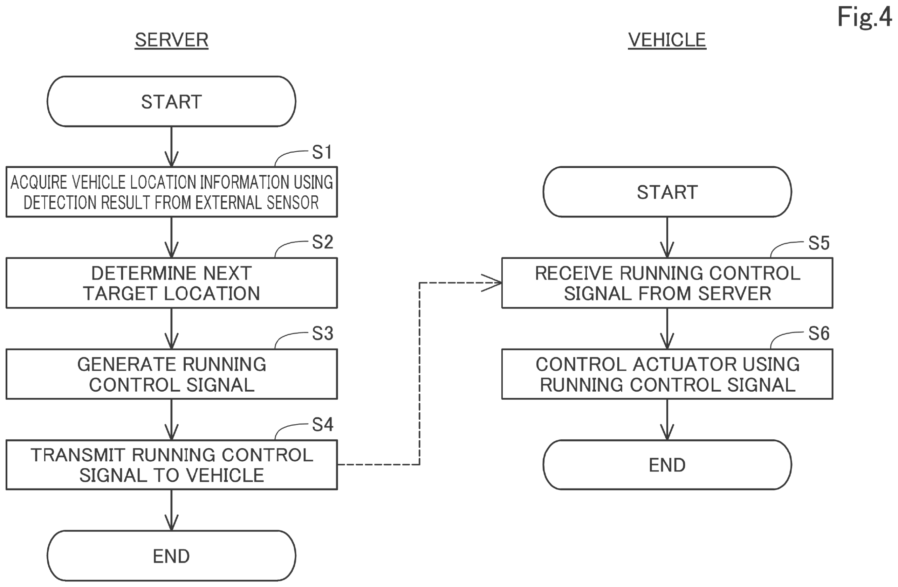

Fig. 4 is a flowchart illustrating a procedure of running control of the vehicle 100 according to the first embodiment. The running control of the vehicle 100 is performed via the first communication path CP1 illustrated in Fig. 3. In the procedure in Fig. 4, the processor 201 of the server 200 executes the program PG2, thus functioning as the remote control unit 210. Moreover, the processor 111 of the vehicle 100 executes the program PG1, thus functioning as the vehicle control unit 115.

In step S1, the processor 201 of the server 200 acquires vehicle location information using the detection result output from the external sensor 300. The vehicle location information is locational information as a basis for generating a running control signal. In the present embodiment, the vehicle location information includes the location and orientation of the vehicle 100 in the global coordinate system GC of the factory FC. Specifically, in step S1, the processor 201 acquires the vehicle location information using the captured image acquired from the camera as the external sensor 300.

More specifically, in step S1, the processor 201 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system GC, thereby acquiring the location of the vehicle 100. The outer shape of the vehicle 100 in the captured image may be detected by inputting the captured image to a detection model DM using artificial intelligence, for example. The detection model DM is prepared in the control system 50 or outside the control system 50. The detection model DM is stored in advance in the memory 202 of the server 200, for example. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label. The processor 201 can acquire the orientation of the vehicle 100 through estimation based on the orientation of a motion vector of the vehicle 100 detected from change in location of a feature point of the vehicle 100 between frames of the captured images using optical flow process, for example.

In step S2, the processor 201 of the server 200 determines a target location to which the vehicle 100 is to move next. In the present embodiment, the target location is expressed by X, Y, and Z coordinates in the global coordinate system GC. The memory 202 of the server 200 contains a reference route RR stored in advance as a route along which the vehicle 100 is to run. The route is expressed by a node indicating a departure place, a node indicating a way point, a node indicating a destination, and a link connecting nodes to each other. The processor 201 determines the target location to which the vehicle 100 is to move next using the vehicle location information and the reference route RR. The processor 201 determines the target location on the reference route RR ahead of a current location of the vehicle 100.

In step S3, the processor 201 of the server 200 generates a running control signal for causing the vehicle 100 to run toward the determined target location. The processor 201 calculates a running speed of the vehicle 100 from transition of the location of the vehicle 100 and makes comparison between the calculated running speed and a target speed of the vehicle 100 determined in advance. If the running speed is lower than the target speed, the processor 201 generally determines an acceleration in such a manner as to accelerate the vehicle 100. If the running speed is higher than the target speed as, the processor 201 generally determines an acceleration in such a manner as to decelerate the vehicle 100. If the vehicle 100 is on the reference route RR, the processor 201 determines a steering angle and an acceleration in such a manner as to prevent the vehicle 100 from deviating from the reference route RR. If the vehicle 100 is not on the reference route RR, in other words, if the vehicle 100 deviates from the reference route RR, the processor 201 determines a steering angle and an acceleration in such a manner as to return the vehicle 100 to the reference route RR.

In step S4, the processor 201 of the server 200 transmits the generated running control signal to the vehicle 100. The processor 201 repeats the acquisition of vehicle location information, the determination of a target location, the generation of a running control signal, the transmission of the running control signal, and others in a predetermined cycle.

In step S5, the processor 111 of the vehicle 100 receives the running control signal transmitted from the server 200. In step S6, the processor 111 of the vehicle 100 controls the actuator group 120 of the vehicle 100 using the received running control signal, thereby causing the vehicle 100 to run at the acceleration and the steering angle indicated by the running control signal. The processor 111 repeats the reception of a running control signal and the control over the actuator group 120 in a predetermined cycle. According to the control system 50 in the present embodiment, it becomes possible to move the vehicle 100 without using a transport unit such as a crane or a conveyor.

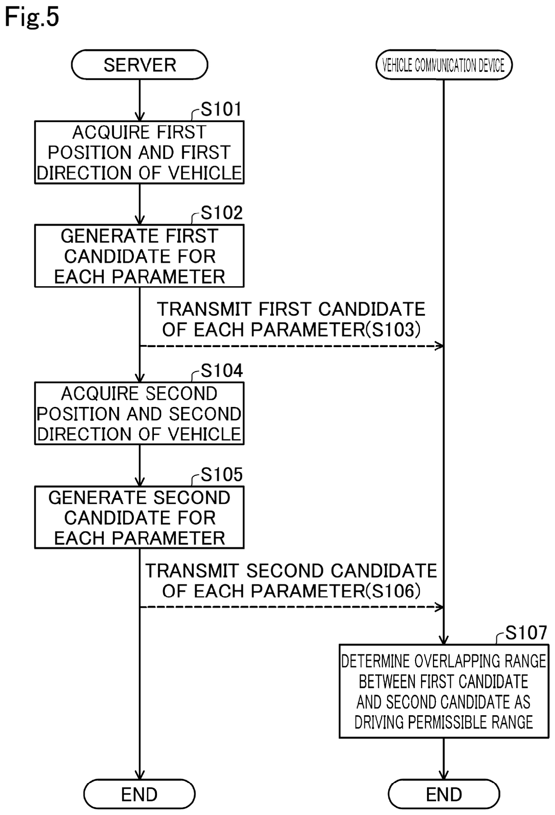

Figure 5 is a flowchart illustrating a processing procedure for determining the driving permissible range DP in the first embodiment. Determination of the driving permissible range DP is performed via the second communication path CP2 shown in Figure 3. As described above, the driving permissible range DP varies depending on the position and the orientation of the vehicle 100. The position and the orientation of the vehicle 100 change moment by moment from a timing when running by unmanned driving begins. Therefore, the flow shown in Figure 5 is repeatedly executed, for example, each time the position and the orientation of the vehicle 100 are obtained, or at a predetermined cycle from the timing when running by unmanned driving begins.

For example, the driving permissible range DP can be defined by a steering angle of the vehicle 100, a running speed of the vehicle 100, and a grace period related to running of the vehicle 100. Here, depending on whether on a front side or on a rear side of the vehicle 100, a relative position and a distance between the vehicle 100 and another object vary. Therefore, a range of the steering angle of the vehicle 100 within which running is permitted, a range of the running speed of the vehicle 100 within which running is permitted, and a range of the grace period within which the vehicle 100 is permitted to continue running vary depending on whether a traveling category of the vehicle 100 is forward movement or rearward movement. Accordingly, described below is an example in which the driving permissible range DP is defined by four parameters: the steering angle of the vehicle 100, the running speed of the vehicle 100, the grace period related to running of the vehicle 100, and the traveling category of the vehicle 100.

In Step S101, the first generation unit 211 of the server 200 acquires a first position PO1 and a first orientation DI1 of the vehicle 100 illustrated in Fig. 1. The first position PO1 and the first orientation DI1 of the vehicle 100 are a position and an orientation of the vehicle 100 acquired by a first captured image PI1 output from a first camera CM1 being input into the detection model DM to detect the outer shape of the vehicle 100. The first camera CM1 images the vehicle 100 from one point of view. For example, the first position PO1 of the vehicle 100 can be represented by X and Y coordinates when the vehicle 100 is looked down in a Z-direction perpendicular to a road surface. Moreover, for example, the first orientation DI1 of the vehicle 100 can be represented by an angle θ when the vehicle 100 is looked down in the Z-direction perpendicular to the road surface.

As illustrated in Fig. 5, in Step S102, the first generation unit 211 uses the first position PO1 and the first orientation DI1 of the vehicle 100 to generate the first candidate for each parameter. That is, the first generation unit 211 uses the first position PO1 and the first orientation DI1 of the vehicle 100 to generate the first candidate for the steering angle of the vehicle 100, the first candidate for the running speed of the vehicle 100, the first candidate for the grace period related to running of the vehicle 100, and the first candidate for the traveling category of the vehicle 100.

In Step S103, the first generation unit 211 transmits the generated first candidate for each parameter to the vehicle 100.

In Step S104, the second generation unit 212 of the server 200 acquires a second position PO2 and a second orientation DI2 of the vehicle 100 illustrated in Fig. 1. The second position PO2 and the second orientation DI2 of the vehicle 100 are a position and an orientation of the vehicle 100 acquired by a second captured image PI2 output from a second camera CM2 being input into the detection model DM to detect the outer shape of the vehicle 100. The second camera CM2 images the vehicle 100 from another point of view. Similarly to the first position PO1 of the vehicle 100, for example, the second position PO2 of the vehicle 100 can be represented by X and Y coordinates when the vehicle 100 is looked down in the Z-direction perpendicular to the road surface. Moreover, similarly to the first orientation DI1 of the vehicle 100, for example, the second orientation DI2 of the vehicle 100 can be represented by the angle θ when the vehicle 100 is looked down in the Z-direction perpendicular to the road surface.

As illustrated in Fig. 5, in Step S105, the second generation unit 212 uses the second position PO2 and the second orientation DI2 of the vehicle 100 to generate the second candidate for each parameter. That is, the second generation unit 212 uses the second position PO2 and the second orientation DI2 of the vehicle 100 to generate the second candidate for the steering angle of the vehicle 100, the second candidate for the running speed of the vehicle 100, the second candidate for the grace period related to running of the vehicle 100, and the second candidate for the traveling category of the vehicle 100.

In Step S106, the second generation unit 212 transmits the generated second candidate for each parameter to the determination unit 131 of the communication device 130 installed to the vehicle 100.

Note that whichever the steps from Step S101 to Step S103 or the steps from Step S104 to Step S106 may be executed first, or they may be executed simultaneously.

In Step S107, the determination unit 131 identifies for each parameter the overlapping range between the first candidate for the corresponding parameter received from the first generation unit 211 and the second candidate for the corresponding parameter received from the second generation unit 212. Then, the determination unit 131 determines the overlapping range identified for each parameter as the driving permissible range DP.

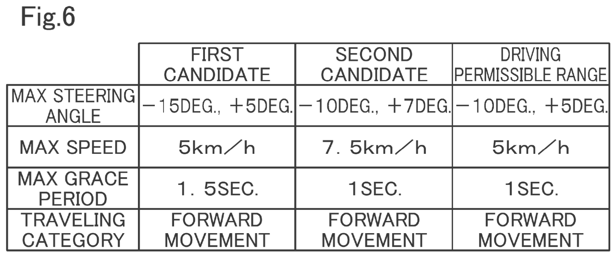

Fig. 6 is a table illustrating an example of candidates for each parameter defining the driving permissible range DP and the driving permissible range DP in accordance with these candidates. Fig. 6 illustrates a maximum steering angle of the vehicle 100, a maximum speed of the vehicle 100, a maximum grace period related to running of the vehicle 100, and the traveling category of the vehicle 100 for each of the first candidate and the second candidate. The maximum steering angle is a maximum value of a range of the steering angle of the vehicle 100 within which running is permitted. The maximum speed is a maximum value of a range of the running speed of the vehicle 100 within which running is permitted. The maximum grace period is a maximum value of a range of the grace period within which the vehicle 100 is permitted to continue running. The traveling category is a category indicating whether the vehicle 100 travels forward or rearward. Note that a minimum steering angle of the vehicle 100 is 0 degrees, a minimum speed of the vehicle 100 is 0 km/h, and a minimum grace period related to running of the vehicle 100 is 0 seconds. The minimum steering angle is a minimum value of the range of the steering angle of the vehicle 100 within which running is permitted. The minimum speed is a minimum value of the range of the running speed of the vehicle 100 within which running is permitted. The minimum grace period is a minimum value of the range of the grace period within which the vehicle 100 is permitted to continue running.

For example, assuming that a steering angle when the vehicle 100 travels without turning left or right is 0 degrees as a median, the maximum steering angle can be represented by an angular difference from 0 degrees, which is the median. In Fig. 6, the maximum steering angle when the vehicle 100 turns left is represented by a negative value with respect to the median, and the maximum steering angle when the vehicle 100 turns right is represented by a positive value with respect to the median. In the example illustrated in Fig. 6, the maximum steering angle of the first candidate, that is, the maximum steering angle generated by using the first position PO1 and the first orientation DI1 of the vehicle 100 is 15 degrees when the vehicle 100 turns left and is 5 degrees when the vehicle 100 turns right. That is, based on the calculation using the first captured image PI1 output from the first camera CM1, the steering angle is permitted to change within a range of 0 degrees or more and 15 degrees or less when the vehicle 100 turns left. The steering angle is permitted to change within a range of 0 degrees or more and 5 degrees or less when the vehicle 100 turns right. On the other hand, the maximum steering angle of the second candidate, that is, the maximum steering angle generated by using the second position PO2 and the second orientation DI2 of the vehicle 100 is 10 degrees when the vehicle 100 turns left and is 7 degrees when the vehicle 100 turns right. That is, based on the calculation using the second captured image PI2 output from the second camera CM2, the steering angle is permitted to change within a range of 0 degrees or more and 10 degrees or less when the vehicle 100 turns left. The steering angle is permitted to change within a range of 0 degrees or more and 7 degrees or less when the vehicle 100 turns right. The overlapping range between the first candidate and the second candidate for the steering angle of the vehicle 100 is 0 degrees or more and 10 degrees or less when the vehicle 100 turns left, and 0 degrees or more and 5 degrees or less when the vehicle 100 turns right. Therefore, in the driving permissible range DP, the steering angle when the vehicle 100 turns left is determined to be 0 degrees or more and 10 degrees or less, and the steering angle when the vehicle 100 turns right is determined to be 0 degrees or more and 5 degrees or less.

In the example illustrated in Fig. 6, the maximum speed of the first candidate, that is, the maximum speed generated by using the first position PO1 and the first orientation DI1 of the vehicle 100 is 5 km/h. That is, based on the calculation using the first captured image PI1 output from the first camera CM1, the running speed of the vehicle 100 is permitted to change within a range of 0 km/h or more and 5 km/h or less. On the other hand, the maximum speed of the second candidate, that is, the maximum speed generated by using the second position PO2 and the second orientation DI2 of the vehicle 100 is 7.5 km/h. That is, based on the calculation using the second captured image PI2 output from the second camera CM2, the running speed of the vehicle 100 is permitted to change within a range of 0 km/h or more and 7.5 km/h or less. The overlapping range between the first candidate and the second candidate for the running speed of the vehicle 100 is 0 km/h or more and 5 km/h or less. Therefore, in the driving permissible range DP, the running speed of the vehicle 100 is determined to be 0 km/h or more and 5 km/h or less.

In the example illustrated in Fig. 6, the maximum grace period of the first candidate, that is, the maximum grace period generated by using the first position PO1 and the first orientation DI1 of the vehicle 100 is 1.5 seconds. That is, based on the calculation using the first captured image PI1 output from the first camera CM1, the vehicle 100 is permitted to continue running at the running speed of 5 km/h for up to 1.5 seconds from 0 seconds that is the current time. On the other hand, the maximum grace period of the second candidate, that is, the maximum grace period generated by using the second position PO2 and the second orientation DI2 of the vehicle 100 is 1 second. That is, based on the calculation using the second captured image PI2 output from the second camera CM2, the vehicle 100 is permitted to continue running at the running speed of 7.5 km/h for up to 1 second from 0 seconds that is the current time. The overlapping range between the first candidate and the second candidate for the grace period is 0 seconds or more and 1 second or less. Therefore, in the driving permissible range DP, the grace period related to running of the vehicle 100 is determined to be 0 seconds or more and 1 second or less.

In the example illustrated in Fig. 6, the traveling category of the vehicle 100 is the forward movement in both of the first candidate and the second candidate. Therefore, in the driving permissible range DP, the traveling category of the vehicle 100 is determined to be the forward movement. In this manner, the driving permissible range DP in the case in which the vehicle 100 moves forward is defined by the four parameters: the steering angle of the vehicle 100, the running speed of the vehicle 100, the grace period related to running of the vehicle 100, and the traveling category of the vehicle 100.

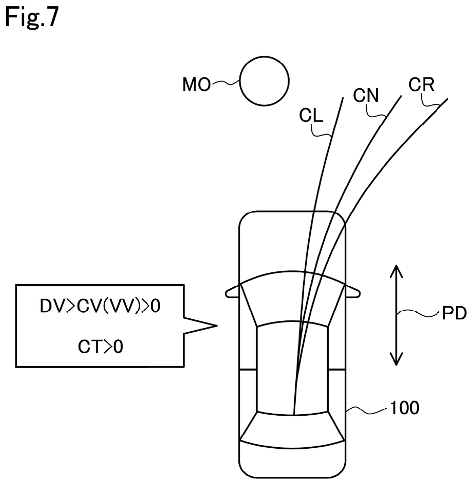

Each of Figs. 7 to 11 is a conceptual diagram illustrating a method for generating a candidate for each parameter in accordance with the surrounding environment of the vehicle 100. Below, specific examples of the method for generating the candidate for each parameter will be described.

Each of the first generation unit 211 and the second generation unit 212 generates, based on the relative position and the distance between the vehicle 100 and another object, a range of the steering angle with respect to an actual steering angle CN as the candidate for the steering angle. The actual steering angle CN is an actual steering angle of the vehicle 100. The range of the steering angle is a range within which the steering angle is changeable without the vehicle 100 coming into contact with another object.

In a case in which the detection unit 213 does not detect that the another moving object MO has approached the vehicle 100, each of the first generation unit 211 and the second generation unit 212 uses a map MP stored in the memory 202 of the server 200 to generate the candidate for the steering angle of the vehicle 100. The map MP indicates a drivable area DA illustrated in Fig. 1. The drivable area DA is determined in accordance with a stationary object SO as another object installed around the track TR. Examples of the stationary object SO include an installation, such as a fence and manufacture equipment installed in the factory FC, and a structure, such as a wall and a pillar partitioning the inside of the factory FC. Each of the first generation unit 211 and the second generation unit 212 reflects the position and the orientation of the vehicle 100 on the map MP to identify the position and the orientation of the vehicle 100 with respect to the drivable area DA, and thereby calculates the relative position and the distance between the vehicle 100 and the stationary object SO. Then, each of the first generation unit 211 and the second generation unit 212 calculates maximum steering angles CL and CR of the vehicle 100 in accordance with the calculated relative position and distance between the vehicle 100 and the stationary object SO. Then, each of the first generation unit 211 and the second generation unit 212 generates a range from the minimum steering angle to the maximum steering angles CL and CR as the candidate for the steering angle of the vehicle 100. For example, in the example illustrated in Fig. 1, the vehicle 100 is, in a state of being parallel to the drivable area DA, positioned closer to the right in the traveling direction with respect to the drivable area DA. In this case, each of the first generation unit 211 and the second generation unit 212 generates the candidate for the steering angle of the vehicle 100 in such a manner that the maximum steering angle CR when the vehicle 100 turns right is smaller than the maximum steering angle CL when the vehicle 100 turns left.

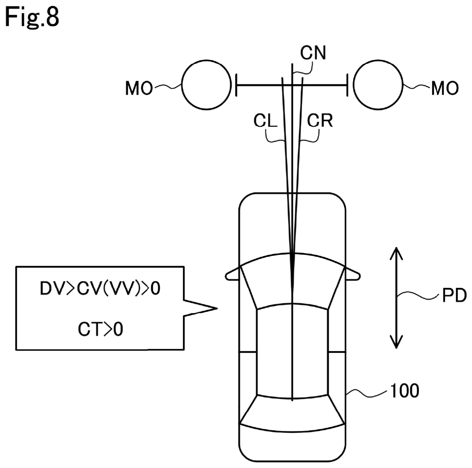

In a case in which the detection unit 213 detects that the another moving object MO has approached the vehicle 100, each of the first generation unit 211 and the second generation unit 212 uses the map MP and the detection result of the sensor to generate the candidate for the steering angle of the vehicle 100. Specifically, each of the first generation unit 211 and the second generation unit 212 uses the map MP to calculate the relative position and the distance between the vehicle 100 and the stationary object SO, and uses the detection result of the sensor to calculate the relative position and the distance between the vehicle 100 and the another moving object MO. Then, each of the first generation unit 211 and the second generation unit 212 calculates the maximum steering angles CL and CR of the vehicle 100 in accordance with the calculated relative position and distance between the vehicle 100 and the stationary object SO and the calculated relative position and distance between the vehicle 100 and the another moving object MO. Then, each of the first generation unit 211 and the second generation unit 212 generates the range from the minimum steering angle to the maximum steering angles CL and CR as the candidate for the steering angle of the vehicle 100. For example, as illustrated in Figs. 7 and 8, in the case in which the another moving object MO has approached the vehicle 100, each of the first generation unit 211 and the second generation unit 212 generates the candidate including the maximum steering angles CL and CR that can avoid contact with the another moving object MO.

Each of the first generation unit 211 and the second generation unit 212 generates the candidate for the running speed based on the distance between the vehicle 100 and another object. Each of the first generation unit 211 and the second generation unit 212 generates, as the candidate for the grace period, time for which the vehicle 100 can run without coming into contact with the another object when the vehicle 100 continues running at the running speed of the generated candidate.

In the case in which the detection unit 213 does not detect that the another moving object MO has approached the vehicle 100, each of the first generation unit 211 and the second generation unit 212 uses the map MP stored in the memory 202 of the server 200 to generate the candidate for the running speed of the vehicle 100. The map MP further indicates a default value DV of the running speed in each of areas DA1 to DA5 in the drivable area DA illustrated in Fig. 1. For example, the default value DV of the running speed is set in accordance with a target production time of the vehicle 100, the number and arrangement of the stationary objects SO, and/or a frequency of the another moving object MO such as a worker coming and going. Each of the first generation unit 211 and the second generation unit 212 reflects the position of the vehicle 100 on the map MP to identify the position of the vehicle 100 with respect to the drivable area DA, and thereby acquires the default value DV in accordance with the position of the vehicle 100. Then, each of the first generation unit 211 and the second generation unit 212 adopts the acquired default value DV as the maximum speed CV. Then, each of the first generation unit 211 and the second generation unit 212 generates the range from the minimum speed to the maximum speed CV as the candidate for the running speed of the vehicle 100. That is, each of the first generation unit 211 and the second generation unit 212 generates the candidate for the running speed of the vehicle 100 in which the default value DV acquired by using the map MP is the maximum value.

In the case in which the detection unit 213 does not detect that the another moving object MO has approached the vehicle 100, each of the first generation unit 211 and the second generation unit 212 generates, as the candidate for the grace period, time in accordance with the default value DV adopted as the maximum speed CV in the candidate for the running speed of the vehicle 100. Specifically, each of the first generation unit 211 and the second generation unit 212 calculates a braking distance of the vehicle 100 when brake is actuated during running at the running speed indicated by the default value DV adopted as the maximum speed CV in the candidate for the running speed of the vehicle 100. Thereby, each of the first generation unit 211 and the second generation unit 212 identifies a braking start position that enables stopping without coming into contact with the stationary object SO. Then, each of the first generation unit 211 and the second generation unit 212 calculates, as a maximum grace period CT, time to reach the braking start position when the vehicle 100 runs at the running speed indicated by the default value DV adopted as the maximum speed CV in the candidate for the running speed of the vehicle 100. Then, each of the first generation unit 211 and the second generation unit 212 generates the range from the minimum grace period to the maximum grace period CT as the candidate for the grace period related to running of the vehicle 100.

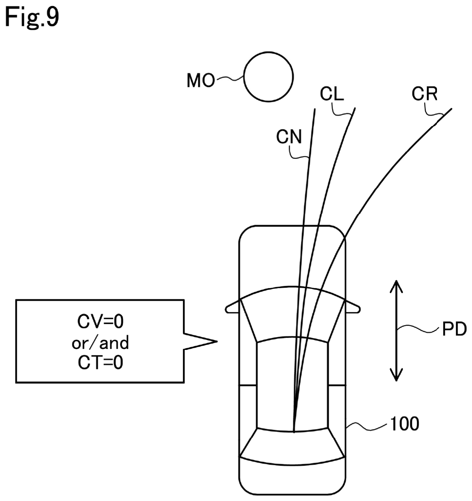

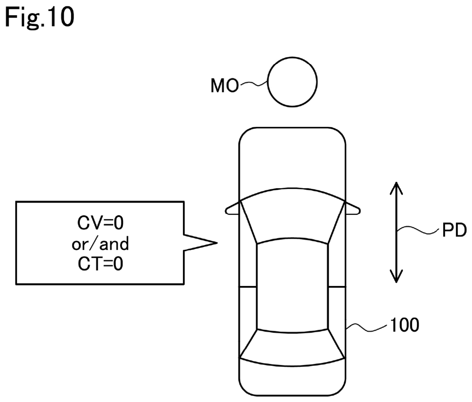

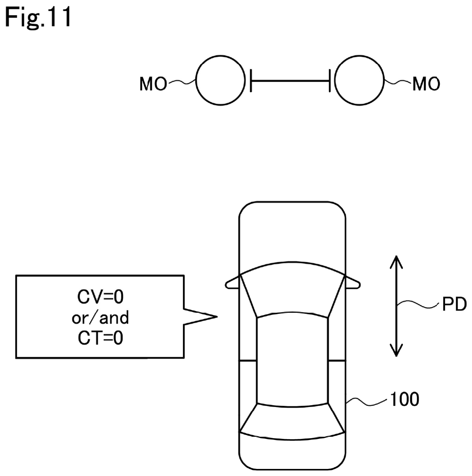

In the case in which the detection unit 213 detects that the another moving object MO has approached the vehicle 100, each of the first generation unit 211 and the second generation unit 212 uses the detection result of the sensor to generate the candidate for the running speed of the vehicle 100 and the candidate for the grace period related to running of the vehicle 100. Specifically, each of the first generation unit 211 and the second generation unit 212 uses the detection result of the sensor to calculate the distance between the vehicle 100 and the another moving object MO. Then, each of the first generation unit 211 and the second generation unit 212 calculates the maximum speed CV of the vehicle 100 in accordance with the calculated distance between the vehicle 100 and the another moving object MO. Then, each of the first generation unit 211 and the second generation unit 212 generates the range from the minimum speed to the maximum speed CV as the candidate for the running speed of the vehicle 100. That is, each of the first generation unit 211 and the second generation unit 212 generates the candidate for the running speed of the vehicle 100 in which a variable value VV in accordance with the distance between the vehicle 100 and the another moving object MO calculated by using the detection result of the sensor is the maximum value. For example, as illustrated in Fig. 7, in a case in which the another moving object MO has approached the vehicle 100 but contact therebetween is avoidable by turning of the vehicle 100, each of the first generation unit 211 and the second generation unit 212 generates the candidate in which the variable value VV smaller than the default value DV of the running speed is the maximum speed CV. Similarly, as illustrated in Fig. 8, in a case in which a plurality of another moving objects MO have approached the vehicle 100 but the vehicle 100 can pass through the plurality of another moving objects MO, each of the first generation unit 211 and the second generation unit 212 generates the candidate in which the variable value VV smaller than the default value DV of the running speed is the maximum speed CV. Accordingly, the vehicle 100 decelerates when the vehicle 100 runs near the another moving object MO. On the other hand, as illustrated in Figs. 9 and 10, in a case in which the another moving object MO has approached the vehicle 100 and turning of the vehicle 100 cannot avoid contact therebetween, each of the first generation unit 211 and the second generation unit 212 generates the candidate for the running speed of the vehicle 100 in such a manner that the maximum speed CV is zero. Further, as illustrated in Fig. 11, in a case in which a plurality of another moving objects MO have approached the vehicle 100 and the vehicle 100 cannot pass through the plurality of another moving objects MO, each of the first generation unit 211 and the second generation unit 212 generates the candidate for the running speed of the vehicle 100 in such a manner that the maximum speed CV is zero. Accordingly, the vehicle 100 is stopped, so that the vehicle 100 is prevented from coming into contact with the another moving object MO. That is, each of the first generation unit 211 and the second generation unit 212 sets, as the maximum speed CV, the smaller variable value VV as the distance between the vehicle 100 and the another moving object MO in the traveling direction decreases.

In the case in which the detection unit 213 detects that the another moving object MO has approached the vehicle 100, each of the first generation unit 211 and the second generation unit 212 generates, as the candidate for the grace period, time in accordance with the variable value VV adopted as the maximum speed CV in the candidate for the running speed of the vehicle 100. Specifically, each of the first generation unit 211 and the second generation unit 212 calculates a braking distance of the vehicle 100 when brake is actuated during running at the running speed indicated by the variable value VV adopted as the maximum speed CV in the candidate for the running speed of the vehicle 100. Thereby, each of the first generation unit 211 and the second generation unit 212 identifies a braking start position that enables stopping without coming into contact with the another moving object MO. Then, each of the first generation unit 211 and the second generation unit 212 calculates, as the maximum grace period CT, time to reach the braking start position when the vehicle 100 runs at the running speed indicated by the variable value VV adopted as the maximum speed CV in the candidate for the running speed of the vehicle 100. Then, each of the first generation unit 211 and the second generation unit 212 generates the range from the minimum grace period to the maximum grace period CT as the candidate for the grace period related to running of the vehicle 100.

Note that, as illustrated in Figs. 9 to 11, in the case in which the another moving object MO has approached the vehicle 100 and the vehicle 100 cannot continue running, each of the first generation unit 211 and the second generation unit 212 may generate the candidate for the grace period in such a manner that the maximum grace period CT is zero. That is, in such a case, each of the first generation unit 211 and the second generation unit 212 may generate the candidate in such a manner that at least one of the maximum speed CV and the maximum grace period CT is zero in the driving permissible range DP.

The first generation unit 211 and the second generation unit 212 generate the candidate for the traveling category PD of the vehicle 100 in accordance with a shift position of the vehicle 100. For example, in a case in which the shift position of the vehicle 100 is set to a drive range, each of the first generation unit 211 and the second generation unit 212 generates the candidate indicating the forward movement. For example, in a case in which the shift position of the vehicle 100 is set to a reverse range, each of the first generation unit 211 and the second generation unit 212 generates the candidate indicating the rearward movement.

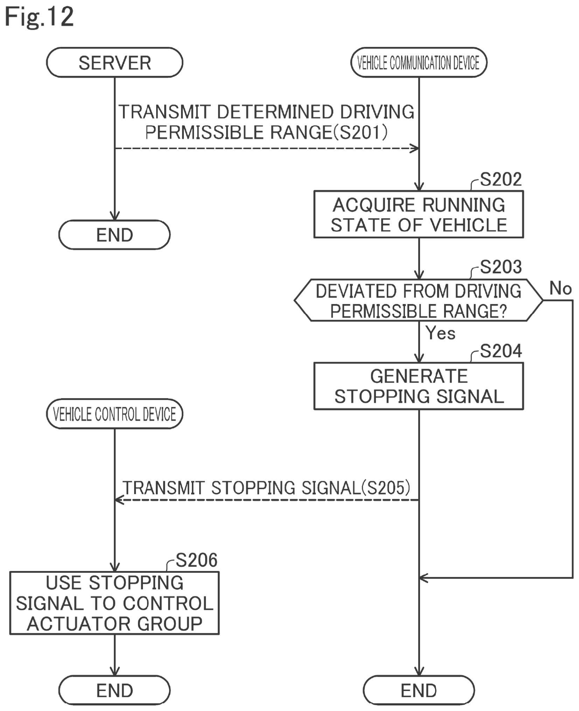

Fig. 12 is a flowchart illustrating a procedure of the stopping control of the vehicle 100 according to the first embodiment. The stopping control of the vehicle 100 is performed via the second communication path CP2 illustrated in Fig. 3. As described above, the driving permissible range DP is updated as needed in accordance with the position and the orientation of the vehicle 100. Therefore, the flow illustrated in Fig. 12 is repetitively executed every time the driving permissible range DP is updated, or in a predetermined cycle from a time point at which running by unmanned driving starts.

In Step S201, the determination unit 131 of the communication device 130 installed to the vehicle 100 transmits the determined driving permissible range DP to the stopping control unit 132 of the communication device 130 installed to the vehicle 100.

In Step S202, the stopping control unit 132 acquires the running state of the vehicle 100. For example, the stopping control unit 132 acquires, as the running state of the vehicle 100, an actual measurement value corresponding to the parameter defining the driving permissible range DP.

In Step S203, the stopping control unit 132 determines whether the running state of the vehicle 100 deviates from the driving permissible range DP received from the determination unit 131. Then, depending on the determination result, the stopping control unit 132 determines whether the vehicle 100 comes into contact with another object when the vehicle 100 continues running.

If the running state of the vehicle 100 does not deviate from the driving permissible range DP received from the determination unit 131 (Step S203: No), the stopping control unit 132 determines that the vehicle 100 does not come into contact with another object even if the vehicle 100 continues running, and ends this flow. Accordingly, the vehicle 100 continues running.

If the running state of the vehicle 100 deviates from the driving permissible range DP received from the determination unit 131 (Step S203: Yes), the stopping control unit 132 determines that the vehicle 100 comes into contact with another object when the vehicle 100 continues running, and executes Step S204. In Step S204, the stopping control unit 132 generates the stopping signal. In Step S205, the stopping control unit 132 transmits the generated stopping signal to the vehicle control device 110 installed to the vehicle 100. In Step S206, the vehicle control unit 115 of the vehicle control device 110 uses the received stopping signal to control the actuator group 120, and thereby stops the vehicle 100. Accordingly, the vehicle 100 stops running.

Described below is a specific example of a method for determining deviation from the driving permissible range DP in the case in which the driving permissible range DP is defined by the four parameters described above.

For example, the relative position and the distance between the vehicle 100 and another object vary depending on whether on the front side or on the rear side of the vehicle 100, and thus even if the driving permissible range DP for the rearward movement is applied to the vehicle 100 moving forward, the steering angle, the running speed, and the grace period defined in the driving permissible range DP are unreliable and meaningless. Similarly, the relative position and the distance between the vehicle 100 and another object vary depending on whether on the front side or on the rear side of the vehicle 100, and thus even if the driving permissible range DP for the forward movement is applied to the vehicle 100 moving rearward, the steering angle, the running speed, and the grace period defined in the driving permissible range DP are unreliable and meaningless. Therefore, in a case in which the traveling category PD of the vehicle 100 identified by an actual shift position of the vehicle 100 does not match the traveling category PD of the vehicle 100 defined in the driving permissible range DP received from the determination unit 131, the vehicle 100 is preferably stopped. Thus, the stopping control unit 132 acquires the actual shift position of the vehicle 100 from the vehicle control unit 115. Then, when the traveling category PD of the vehicle 100 identified by the shift position acquired from the vehicle control unit 115 does not match the traveling category PD of the vehicle 100 defined in the driving permissible range DP, the stopping control unit 132 determines deviation from the driving permissible range DP.

Moreover, for example, as time passes from a time point at which the candidate for the parameter defining the driving permissible range DP is generated, the position and the orientation of the vehicle 100 are more likely to have changed, and accordingly the driving permissible range DP may have lower reliability. Therefore, also in a case in which the determination unit 131 cannot receive the candidate for each parameter from the first generation unit 211 or the second generation unit 212 after the maximum grace period CT defined in the driving permissible range DP has passed, the vehicle 100 is preferably stopped. Thus, the stopping control unit 132 acquires from the determination unit 131 elapsed time from a last timing at which the determination unit 131 received the candidate for each parameter from each of the first generation unit 211 and the second generation unit 212. Then, when the elapsed time received from the determination unit 131 exceeds the maximum grace period CT defined in the driving permissible range DP, the stopping control unit 132 determines deviation from the driving permissible range DP.

In the first place, the driving permissible range DP is the range of the running state of the vehicle 100 in which the vehicle 100 is permitted to run without coming into contact with another object. Therefore, even if the traveling category PD of the vehicle 100 or transfer of the candidate for each parameter does not have the problem as described above, in a case in which the steering angle, the running speed, and/or the elapsed time of the vehicle 100 deviates from the driving permissible range DP, the vehicle 100 is preferably stopped. Thus, the stopping control unit 132 acquires from the vehicle control unit 115 the actual steering angle CN of the vehicle 100 and an actual running speed, which is an actual running speed of the vehicle 100. Then, when the actual steering angle CN of the vehicle 100 acquired from the vehicle control unit 115 exceeds the maximum steering angle CL, CR defined in the driving permissible range DP, the stopping control unit 132 determines deviation from the driving permissible range DP. When the actual running speed acquired from the vehicle control unit 115 exceeds the maximum speed CV defined in the driving permissible range DP, the stopping control unit 132 determines deviation from the driving permissible range DP. Once the elapsed time from the current time exceeds the maximum grace period CT defined in the driving permissible range DP, the stopping control unit 132 determines deviation from the driving permissible range DP.

That is, in the case in which at least one parameter among the plurality of parameters defining the driving permissible range DP deviates from the driving permissible range DP, the stopping control unit 132 preferably stops the vehicle 100.

Note that in a case in which the running state of the vehicle 100 itself cannot be acquired from the vehicle control unit 115 or the like, the stopping control unit 132 cannot grasp the running state of the vehicle 100, and the running state of the vehicle 100 cannot be compared with the driving permissible range DP. Therefore, also in such a case, the vehicle 100 is preferably stopped. Thus, also in the case in which the running state of the vehicle 100 cannot be acquired, the stopping control unit 132 generates the stopping signal and transmits the generated stopping signal to the vehicle control device 110, and thereby stops the vehicle 100.

As described above, the relative position and the distance between the vehicle 100 and another object vary depending on the position and the orientation of the vehicle 100. Therefore, the driving permissible range DP varies depending on the position and the orientation of the vehicle 100. Here, the position and the orientation of the vehicle 100 can be acquired, for example, by the sensor detecting the vehicle 100 or the surrounding environment of the vehicle 100 and inputting the detection result into a learned machine learning model. However, an output value of the machine learning model generally has an error, and even if the position and the orientation of the vehicle 100 are acquired in the same method by using the same detection result, the acquired position and orientation may vary. Further, various factors, such as a type and an installation environment of the sensor, may cause variation in the acquired position and orientation. Therefore, in a case in which a plurality of sensors detect the same vehicle 100, and the position and the orientation of the vehicle 100 are acquired for each detection result, it is difficult to distinguish whether the difference in the acquired position and orientation is simply due to an error of an output value or due to another factor. Under such a condition, it is difficult to uniquely determine a degree of difference in the acquired position and orientation that denies reliability of the sensor, and much effort is required to set a threshold for determining reliability of the sensor. Thus, work for determining the driving permissible range DP may become complicated. Further, in a case in which the positions and the orientations acquired from the detection results of each of the plurality of sensors have a difference equal to or more than a threshold, and a defective sensor cannot be identified, the highly reliable driving permissible range DP cannot be determined, and it may be unavoidable to stop the vehicle 100.

With respect to this, according to the first embodiment, in a case in which the control system 50 uses the positions and the orientations of the vehicle 100 acquired in the same acquisition method by using a plurality of sensors of the same type installed at different positions to determine the driving permissible range DP, the control system 50 can be configured as follows. The control system 50 can use the positions and the orientations of the vehicle 100 acquired by using the detection results of the respective sensors to generate the first candidate and the second candidate for the parameter defining the driving permissible range DP. Then, the control system 50 can determine the overlapping range between the first candidate and the second candidate as the driving permissible range DP. That is, the control system 50 can execute a first generation step, a second generation step, and a determination step to determine the driving permissible range DP. The first generation step is a step of generating the first candidate for the parameter defining the driving permissible range DP. The first generation step corresponds to Steps S101 to S103 of Fig. 5. The second generation step is a step of generating the second candidate for the parameter defining the driving permissible range DP. The second generation step corresponds to Steps S104 to S106 of Fig. 5. The determination step is a step of determining the overlapping range between the first candidate and the second candidate as the driving permissible range DP and transmitting the determined driving permissible range DP to the control unit of the vehicle 100. The determination step corresponds to Step S107 of Fig. 5 and Step S201 of Fig. 12. In such a mode, the control system 50 determines the overlapping range between the first candidate and the second candidate as the driving permissible range DP, and thereby can determine, as the driving permissible range DP, a narrowest range that may be determined by using the positions and the orientations of the vehicle 100 acquired by the respective sensors. That is, with regard to the running state of the vehicle 100, the control system 50 can determine the driving permissible range DP with a stricter condition imposed. Accordingly, the control system 50 can determine the highly reliable driving permissible range DP. Further, in such a mode, the control system 50 can determine the driving permissible range DP without comparing the positions and the orientations of the vehicle 100 acquired from the respective sensors or setting the threshold for determining reliability of each sensor. Therefore, the control system 50 can simply determine the highly reliable driving permissible range DP.

In the first embodiment, the driving permissible range DP is defined by the four parameters: the steering angle of the vehicle 100 at which running is permitted, the running speed of the vehicle 100 at which running is permitted, the grace period for which the vehicle 100 is permitted to continue running, and the traveling category PD of the vehicle 100. In such a mode, the control system 50 restricts the type and number of parameters defining the driving permissible range DP, and thereby can suppress an amount of information to the minimum in transferring information via the second communication path CP2 illustrated in Fig. 3. Accordingly, the control system 50 can easily confirm that the driving permissible range DP transmitted from the determination unit 131 matches the driving permissible range DP received by the stopping control unit 132.

Note that the driving permissible range DP may be defined by a set of one or more parameters other than those described above. For example, the driving permissible range DP may be defined by using, instead of the steering angle of the vehicle 100, a curvature of a running trajectory of the vehicle 100.

In the first embodiment, the control system 50 can generate the candidates for each of a plurality of parameters defining the driving permissible range DP and identify the overlapping range between the candidates for each parameter to determine the driving permissible range DP. In such a mode, as illustrated in Fig. 6, the control system 50 can adopt the narrowest range for each parameter to determine the driving permissible range DP even if the maximum values at which running is permitted are different between the first candidate and the second candidate for each parameter. Therefore, the control system 50 can simply determine the more highly reliable driving permissible range DP.

In the first embodiment, the control system 50 can detect that the another moving object MO has approached the vehicle 100. In such a mode, the control system 50 can generate the candidate for the parameter defining the driving permissible range DP in different generation methods depending on whether the another moving object MO has approached the vehicle 100.

In the first embodiment, in the case in which the another moving object MO has not approached the vehicle 100, the control system 50 can be configured as follows. In this case, the control system 50 can use the map MP indicating the drivable area DA of the vehicle 100 determined in accordance with the stationary object SO to calculate the relative position and the distance between the vehicle 100 and the stationary object SO. Then, the control system 50 can generate the candidate for the steering angle of the vehicle 100 in accordance with the relative position and the distance between the vehicle 100 and the stationary object SO calculated by using the map MP. In such a mode, the control system 50 can calculate the relative position and the distance between the vehicle 100 and the stationary object SO without detecting the stationary object SO each time by the sensor. Accordingly, the control system 50 can easily generate the candidate for the steering angle of the vehicle 100.

In the first embodiment, in the case in which the another moving object MO has approached the vehicle 100, the control system 50 can be configured as follows. In this case, as described above, the control system 50 can use the map MP to calculate the relative position and the distance between the vehicle 100 and the stationary object SO. Further, the control system 50 detects the another moving object MO by the sensor, and thereby can use the detection result of the sensor to calculate the relative position and the distance between the vehicle 100 and the another moving object MO. Then, the control system 50 can generate the candidate for the steering angle of the vehicle 100 in accordance with the relative position and the distance between the vehicle 100 and the stationary object SO calculated by using the map MP and the relative position and the distance between the vehicle 100 and the another moving object MO calculated by using the detection result of the sensor. In such a mode, the control system 50 can calculate the relative position and the distance between the vehicle 100 and the stationary object SO without detecting the stationary object SO each time by the sensor. Accordingly, the control system 50 can easily generate the candidate for the steering angle of the vehicle 100. In addition, the control system 50 can generate the candidate for the steering angle of the vehicle 100 in consideration of presence of not only the stationary object SO but also the another moving object MO. Therefore, the control system 50 can flexibly determine the highly reliable driving permissible range DP in accordance with a change in the surrounding environment of the vehicle 100.

Note that the method for generating the candidate for the steering angle of the vehicle 100 is not limited to that described above. The control system 50 may generate the candidate for the steering angle of the vehicle 100 in accordance with the relative position and the distance between the vehicle 100 and another object without detecting that the another moving object MO has approached the vehicle 100. That is, the detection unit 213 is not an essential component of the control system 50, and use of the map MP in generation of the candidate for the steering angle of the vehicle 100 is not essential.

In the first embodiment, in the case in which the another moving object MO has not approached the vehicle 100, the control system 50 can be configured as follows. In this case, the control system 50 can use the map MP indicating the default value DV of the running speed in each of the areas DA1 to DA5 of the drivable area DA of the vehicle 100 to acquire the default value DV of the running speed in accordance with the position of the vehicle 100. Then, the control system 50 can generate the candidate for the running speed of the vehicle 100 in which the default value DV acquired by using the map MP is the maximum value. Further, the control system 50 can generate, as the candidate for the grace period related to running of the vehicle 100, the time in accordance with the default value DV acquired by using the map MP. In such a mode, the control system 50 can easily generate the candidate for the running speed of the vehicle 100 and the candidate for the grace period related to running of the vehicle 100 by using the default value DV of the running speed in accordance with the position of the vehicle 100 without detecting the stationary object SO each time by the sensor.

In the first embodiment, in the case in which the another moving object MO has approached the vehicle 100, the control system 50 can be configured as follows. In this case, the control system 50 can use the detection result of the sensor to calculate the distance between the vehicle 100 and the another moving object MO. Then, the control system 50 can generate the candidate for the running speed of the vehicle 100 in which the variable value VV in accordance with the distance between the vehicle 100 and the another moving object MO calculated by using the detection result of the sensor is the maximum value. Further, the control system 50 can generate, as the candidate for the grace period related to running of the vehicle 100, the time in accordance with the variable value VV in accordance with the distance between the vehicle 100 and the another moving object MO calculated by using the detection result of the sensor. In such a mode, the control system 50 can calculate the distance between the vehicle 100 and the stationary object SO without detecting the stationary object SO each time by the sensor. Accordingly, the control system 50 can easily generate the candidate for the running speed of the vehicle 100 and the candidate for the grace period related to running of the vehicle 100. In addition, the control system 50 can generate the candidate for the running speed of the vehicle 100 and the grace period related to running of the vehicle 100 in consideration of presence of not only the stationary object SO but also the another moving object MO. Therefore, the control system 50 can flexibly determine the highly reliable driving permissible range DP in accordance with a change in the surrounding environment of the vehicle 100.

In the first embodiment, in the case in which the another moving object MO has approached the vehicle 100, the control system 50 can make the running speed of the vehicle 100 and the grace period related to running of the vehicle 100 variable in accordance with the distance between the vehicle 100 and the another moving object MO. Specifically, in the case in which the another moving object MO has approached the vehicle 100 and turning of the vehicle 100 cannot avoid contact therebetween, the control system 50 makes at least one of the maximum speed CV and the maximum grace period CT zero. Accordingly, the control system 50 can stop the vehicle 100. In the case in which the another moving object MO has approached the vehicle 100 but contact therebetween is avoidable by turning of the vehicle 100, or a plurality of another moving objects MO have approached the vehicle 100 but the vehicle 100 can pass through the plurality of another moving objects MO, the control system 50 makes the maximum speed CV smaller than the default value DV. Accordingly, while the control system 50 decelerates the vehicle 100 to secure safety when the vehicle 100 runs near the another moving object MO, the control system 50 can cause the vehicle 100 to continue running. In such a mode, the vehicle 100 can be prevented from stopping uniformly regardless of the distance between the vehicle 100 and the another moving object MO. That is, the vehicle 100 can be prevented from stopping unnecessarily every time the another moving object MO enters the drivable area DA. Accordingly, while the control system 50 secures safety when the vehicle 100 runs near the another moving object MO, the control system 50 can reduce a possibility of stagnation in running of the vehicle 100. Note that, in this embodiment, the control system 50 is used in the factory FC. Therefore, by making the running speed of the vehicle 100 and the grace period related to running of the vehicle 100 variable, the control system 50 can secure safety when the vehicle 100 runs near the another moving object MO such as a worker and reduce a possibility of production delay of the vehicle 100.

Note that the method for generating the candidate for the running speed of the vehicle 100 is not limited to that described above. The method for generating the grace period related to running of the vehicle 100 is not limited to that described above. The control system 50 may generate the candidate for the running speed of the vehicle 100 and the candidate for the grace period related to running of the vehicle 100 in accordance with the distance between the vehicle 100 and another object without detecting that the another moving object MO has approached the vehicle 100. That is, the detection unit 213 is not an essential component of the control system 50, and use of the map MP in generation of the candidate for the running speed of the vehicle 100 and the candidate for the grace period related to running of the vehicle 100 is not essential.

In the first embodiment, the control system 50 can generate the candidate for the traveling category PD of the vehicle 100 in accordance with the shift position of the vehicle 100. In such a mode, the control system 50 can easily generate the candidate for the traveling category PD of the vehicle 100 by acquiring the shift position of the vehicle 100.

Note that the method for generating the candidate for the traveling category PD of the vehicle 100 is not limited to that described above. For example, the control system 50 may generate the candidate for the traveling category PD of the vehicle 100 in accordance with a rotation orientation of a driving motor installed to the vehicle 100 and a rotation speed of a wheel.

In the first embodiment, the running control of the vehicle 100 using the running control signal and the stopping control of the vehicle 100 using the driving permissible range DP are performed via the different communication paths CP1 and CP2. In this manner, by the normal running control and the stopping control based on the driving permissible range DP having redundancy, the stopping signal can be transmitted to the vehicle 100 via the communication path CP1 or CP2 when the vehicle 100 is preferably stopped. Therefore, when the vehicle 100 is preferably stopped, the control system 50 can more surely stop the vehicle 100.

In the first embodiment, the first communication path CP1 used for the running control of the vehicle 100 can transfer more information than the second communication path CP2 used for the stopping control of the vehicle 100. In such a mode, the control system 50 can flexibly control running of the vehicle 100 based on more information.

In the first embodiment, the second communication path CP2 used for the stopping control of the vehicle 100 restricts an amount of information to be transferred as compared with the first communication path CP1 used for the running control of the vehicle 100, and thereby higher reliability can be realized. In such a mode, when the vehicle 100 is preferably stopped, the control system 50 can more surely stop the vehicle 100 by using the driving permissible range DP.

In the first embodiment, the determination unit 131 and the stopping control unit 132 are implemented as a function of the communication device 130 installed to the vehicle 100. The communication device 130 may detachably be attached to the vehicle 100. In such a mode, the running state of the vehicle 100 that executes the unmanned driving control can be controlled by attaching the communication device 130 to the vehicle 100 in a section where the unmanned driving control is executed.

### B. Second Embodiment

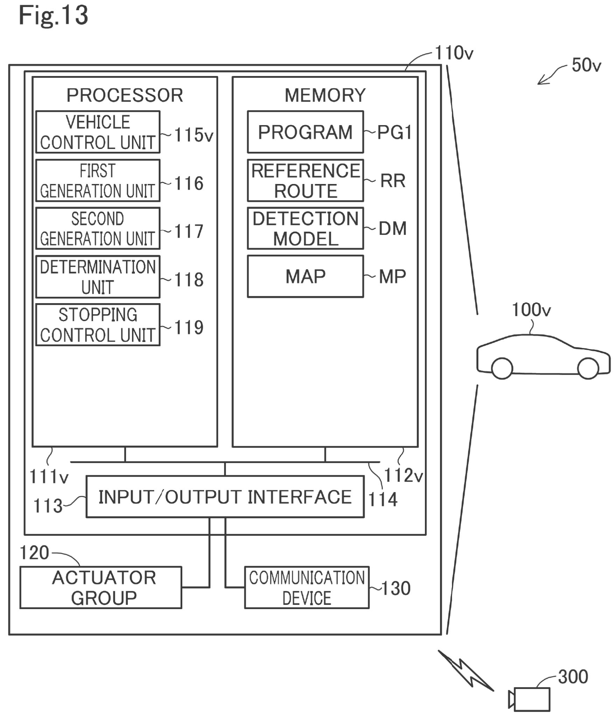

Fig. 13 is an explanatory diagram illustrating a schematic configuration of a control system 50v according to a second embodiment. This embodiment is different from the first embodiment in that the control system 50v does not include the server 200. Moreover, a vehicle 100v of this embodiment is capable of running by autonomous control of the vehicle 100v. Other configurations are the same as those of the first embodiment unless otherwise described.

In this embodiment, a processor 111v of a vehicle control device 110v executes the program PG1 stored in a memory 112v, thus functioning as a vehicle control unit 115v, a first generation unit 116, a second generation unit 117, a determination unit 118, and a stopping control unit 119. Similarly to the first generation unit 211 in the first embodiment, the first generation unit 116 generates the first candidate for the parameter defining the driving permissible range DP. Similarly to the second generation unit 212 in the first embodiment, the second generation unit 117 generates the second candidate for the parameter defining the driving permissible range DP. Similarly to the determination unit 131 in the first embodiment, the determination unit 118 determines the overlapping range between the first candidate and the second candidate for the parameter as the driving permissible range DP and transmits the determined driving permissible range DP to the stopping control unit 119. Similarly to the stopping control unit 132 in the first embodiment, in the case in which the running state of the vehicle 100 deviates from the driving permissible range DP received from the determination unit 131, the stopping control unit 119 generates the stopping signal and transmits the generated stopping signal to the vehicle control unit 115v, and thereby stops the vehicle 100. The vehicle control unit 115v acquires the output result of the sensor and uses the output result to generate the running control signal. The vehicle control unit 115v then outputs the generated running control signal to cause the actuator group 120 to operate, and thereby can cause the vehicle 100v to run by autonomous control. In this embodiment, the memory 112v stores, in addition to the program PG1, the detection model DM and a reference route RR in advance. Further, when the vehicle control unit 115v receives the stopping signal from the stopping control unit 119, the vehicle control unit 115v uses the stopping signal to control the actuator group 120, and thereby stops the vehicle 100.

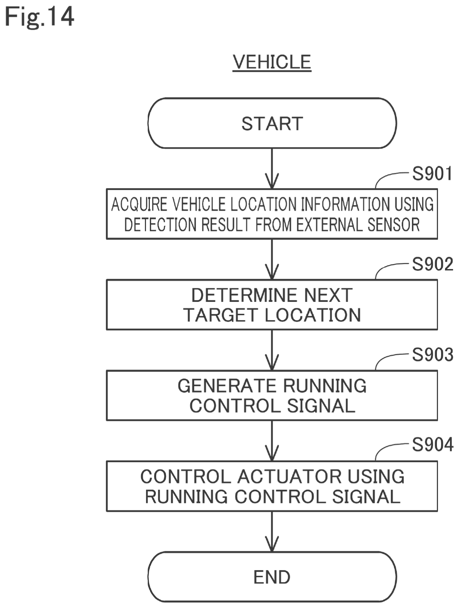

Fig. 14 is a flowchart illustrating a procedure of running control of the vehicle 100v according to the second embodiment. In the procedure in Fig. 14, the processor 111v of the vehicle 100v executes the program PG1, thus functioning as the vehicle control unit 115v.

In step S901, the processor 111v of the vehicle control device 110v acquires vehicle location information using detection result output from the camera as the external sensor 300. In step S902, the processor 111v determines a target location to which the vehicle 100v is to move next. In step S903, the processor 111v generates a running control signal for causing the vehicle 100v to run to the determined target location. In step S904, the processor 111v controls the actuator group 120 using the generated running control signal, thereby causing the vehicle 100v to run by following a parameter indicated by the running control signal. The processor 111v repeats the acquisition of vehicle location information, the determination of a target location, the generation of a running control signal, and the control over the actuator in a predetermined cycle. According to the control system 50v in the present embodiment, it is possible to cause the vehicle 100v to run by autonomous control without controlling the vehicle 100v remotely using the server 200.

### C. Other Embodiments

### C-1. Another Embodiment 1

In each of the embodiments described above, at least part of the function of the server 200 may be implemented as a function of the communication device 130 installed to the vehicle 100, 100v, may be implemented as a function of the vehicle control device 110, 110v, or may be implemented as a function of the sensor. Moreover, at least part of the function of the communication device 130 installed to the vehicle 100, 100v may be implemented as a function of the server 200, may be implemented as a function of the vehicle control device 110, 110v, or may be implemented as a function of the sensor. Moreover, at least part of the function of the vehicle control device 110, 110v may be implemented as a function of the server 200, may be implemented as a function of the communication device 130 installed to the vehicle 100, 100v, or may be implemented as a function of the sensor. In such a mode, the configuration of the control system 50, 50v can be changed as appropriate.

### C-2. Another Embodiment 2

The relative position and the distance between the vehicle 100, 100v and another object vary depending on a total length and a vehicle width of the vehicle 100, 100v. Therefore, the maximum steering angle CL, CR, the maximum speed CV, and the maximum grace period CT may vary depending on the total length and the vehicle width of the vehicle 100, 100v. Thus, each of the first generation unit 211 and the second generation unit 212 may generate the candidate for at least one of the steering angle of the vehicle 100, 100v, the running speed of the vehicle 100, 100v, and the grace period related to running of the vehicle 100, 100v in accordance with the size of the vehicle 100, 100v. In such a mode, the control system 50, 50v can generate the more accurate candidate for the steering angle, can generate the more accurate candidate for the running speed, and can generate the more accurate candidate for the grace period. Accordingly, the control system 50, 50v can use the more accurate candidate to determine the driving permissible range DP, and thus can simply determine the more highly reliable driving permissible range DP.

### C-3. Another Embodiment 3

In each of the embodiments described above, the control system 50, 50v may further include a confirmation unit. The confirmation unit confirms that the driving permissible range DP transmitted from the determination unit 131 matches the driving permissible range DP received by the control unit 119, 132 of the vehicle 100, 100v. In such a mode, the control system 50, 50v can confirm that the driving permissible range DP has correctly transmitted from the determination unit 118, 131 and received by the control unit 119, 132 of the vehicle 100, 100v. Accordingly, the control system 50, 50v can ensure reliability of the driving permissible range DP.

### C-4. Another Embodiment 4

In each of the embodiments described above, the first generation unit 116, 211 and the second generation unit 117, 212 satisfy a first condition that the first sensor and the second sensor are different sensors. In each of the embodiments described above, the first generation unit 116, 211 and the second generation unit 117, 212 satisfy the first condition by the sensors being installed at different positions. However, in another embodiment, the first generation unit 116, 211 and the second generation unit 117, 212 may satisfy at least one of the first condition and a second condition that the first acquisition method and the second acquisition method are different acquisition methods. For example, the following modes (1) to (3) may be adopted.
(1) The sensors as the acquisition sources of the detection results used to acquire the positions and the orientations of the vehicle 100, 100v may be of different types between the first generation unit 116, 211 and the second generation unit 117, 212. That is, the first generation unit 116, 211 and the second generation unit 117, 212 may satisfy the first condition by using the different types of sensors. In such a mode, the control system 50, 50v can use the positions and the orientations of the vehicle 100, 100v acquired by using a plurality of sensors of different types to determine the driving permissible range DP. Also in such a mode, similarly to each of the embodiments described above, the control system 50, 50v can determine the overlapping range between the first candidate and the second candidate as the driving permissible range DP to simply determine the highly reliable driving permissible range DP.
(2) The first generation unit 116, 211 and the second generation unit 117, 212 may employ different methods for acquiring the positions and the orientations of the vehicle 100, 100v. That is, the first generation unit 116, 211 and the second generation unit 117, 212 may satisfy the second condition. In such a mode, the control system 50, 50v can use the positions and the orientations of the vehicle 100, 100v acquired in different acquisition methods to determine the driving permissible range DP. Also in such a mode, similarly to each of the embodiments described above, the control system 50, 50v can determine the overlapping range between the first candidate and the second candidate as the driving permissible range DP to simply determine the highly reliable driving permissible range DP.
(3) The first generation unit 116, 211 and the second generation unit 117, 212 may employ different sensors as the acquisition sources of the detection results used to acquire the positions and the orientations of the vehicle 100, 100v, and may also employ different methods for acquiring the positions and the orientations of the vehicle 100, 100v. That is, the first generation unit 116, 211 and the second generation unit 117, 212 may satisfy both of the first condition and the second condition. Like such a mode, a larger difference in the acquisition condition of the position and orientation of the vehicle 100, 100v makes a difference in the position and orientation of the vehicle 100, 100v more likely to occur and a difference between the first candidate and the second candidate more likely to increase. Since the driving permissible range DP is determined to be the overlapping range between the first candidate and the second candidate, as the difference between the first candidate and the second candidate increases, it is possible to determine the driving permissible range DP that is a narrower range. Thereby, the control system 50, 50v can simply determine the further more highly reliable driving permissible range DP.

### C-5. Another Embodiment 5

The control system 50, 50v may generate three or more candidates for the same parameter and determine an overlapping range between the three or more candidates as the driving permissible range DP. In this case, for example, the positions and the orientations of the vehicle 100, 100v used for generating the candidates for the parameter are acquired in the same or different acquisition methods by using detection results of three or more sensors of the same or different types. The positions and the orientations of the vehicle 100, 100v used for generating the candidates for the parameter may be acquired in three or more different acquisition methods by using detection results of a single sensor. In such a mode, as the number of candidates for the parameter increases, the overlapping range between the candidates is likely to be narrowed. Thereby, the control system 50, 50v can simply determine the further more highly reliable driving permissible range DP.

### C-6. Another Embodiment 6

In each of the embodiments described above, the position and the orientation of the vehicle 100, 100v used for generating the candidate for the parameter may be acquired in an acquisition method different from a method for detecting the outer shape of the vehicle 100, 100v from the captured image by using the detection model DM. For example, the position and the orientation of the vehicle 100, 100v may be acquired by using a bounding box generated through estimation of a region including the vehicle 100, 100v in the captured image. The bounding box is a bounding rectangle surrounding a region estimated to be a region indicating the vehicle 100, 100v in each region included in the captured image. For example, the bounding box can be acquired by inputting the captured image into a rectangle generation model that utilizes artificial intelligence. For example, the rectangle generation model is prepared inside or outside of the control system 50 and stored in the memory 112v, 202 in advance. Examples of the rectangle generation model include a learned machine learning model that has been trained to implement pattern matching. Also in such a mode, the control system 50, 50v can generate two or more candidates for the parameter by using the positions and the orientations of the vehicle 100, 100v and determine an overlapping range between the two or more candidates as the driving permissible range DP to simply determine the highly reliable driving permissible range DP.

### C-7. Another Embodiment 7

In each of the embodiments described above, the position and the orientation of the vehicle 100, 100v used for generating the candidate for the parameter may be acquired by using, instead of or in addition to the detection result of the external sensor 300, a detection result of an internal sensor. In the case in which the detection result of the internal sensor is used, for example, the position and the orientation of the vehicle 100, 100v may be acquired based on a relative position and a relative angle of the vehicle 100, 100v with respect to a dividing line, such as a white line, provided to the track TR. Also in such a mode, the control system 50, 50v can generate two or more candidates for the parameter by using the positions and the orientations of the vehicle 100, 100v and determine an overlapping range between the two or more candidates as the driving permissible range DP to simply determine the highly reliable driving permissible range DP.

### C-8. Another Embodiment 8

In each of the above-described embodiments, the external sensor 300 is not limited to the camera but may be the distance measuring device, for example. The distance measuring device is a light detection and ranging (LiDAR) device, for example. In this case, detection result output from the external sensor 300 may be three-dimensional point cloud data representing the vehicle 100, 100v. The server 200 and the vehicle 100, 100v may acquire the vehicle location information through template matching using the three-dimensional point cloud data as the detection result and reference point cloud data, for example.

### C-9. Another Embodiment 9

In the above-described first embodiment, the server 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
(1) The server 200 may acquire vehicle location information, determine a target location to which the vehicle 100 is to move next, and generate a route from a current location of the vehicle 100 indicated by the acquired vehicle location information to the target location. The server 200 may generate a route to the target location between the current location and a destination or generate a route to the destination. The server 200 may transmit the generated route to the vehicle 100. The vehicle 100 may generate a running control signal in such a manner as to cause the vehicle 100 to run along the route received from the server 200 and control the actuator group 120 using the generated running control signal.
(2) The server 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator group 120 using the generated running control signal.
(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. The internal sensor may include, for example, a sensor that detects a motion state of the vehicle 100, a sensor that detects an operating state of each part of the vehicle 100, and a sensor that detects an environment surrounding the vehicle 100. Specifically, the internal sensor may include a camera, LiDAR, a millimeter wave radar, an ultrasonic wave sensor, a GPS sensor, an acceleration sensor, and a gyroscopic sensor, for example. For example, in the foregoing embodiment (1), the server 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

### C-10. Another Embodiment 10

In the above-described second embodiment, the vehicle 100v may be equipped with an internal sensor, and detection result output from the internal sensor may be used in at least one of generation of a route and generation of a running control signal. For example, the vehicle 100v may acquire detection result from the internal sensor, and in generating the route, may reflect the detection result from the internal sensor in the route. The vehicle 100v may acquire detection result from the internal sensor, and in generating the running control signal, may reflect the detection result from the internal sensor in the running control signal.

### C-11. Another Embodiment 11

In the above-described second embodiment, the vehicle 100v acquires vehicle location information using detection result from the external sensor. By contrast, the vehicle 100v may be equipped with an internal sensor, the vehicle 100v may acquire vehicle location information using detection result from the internal sensor, determine a target location to which the vehicle 100v is to move next, generate a route from a current location of the vehicle 100v indicated by the acquired vehicle location information to the target location, generate a running control signal for running along the generated route, and control the actuator group 120 using the generated running control signal. In this case, the vehicle 100v is capable of running without using any detection result from an external sensor. The vehicle 100v may acquire target arrival time or traffic congestion information from outside the vehicle 100v and reflect the target arrival time or traffic congestion information in at least one of the route and the running control signal. The functional configuration of the control system 50v may be entirely provided at the vehicle 100v. Specifically, the processes realized by the control system 50v in the present disclosure may be realized by the vehicle 100v alone.

### C-12. Another Embodiment 12

In the above-described first embodiment, the server 200 automatically generates a running control signal to be transmitted to the vehicle 100. By contrast, the server 200 may generate a running control signal to be transmitted to the vehicle 100 in response to operation by an external operator existing outside the vehicle 100. For example, the external operator may operate an operating device including a display on which a captured image output from the external sensor 300 is displayed, steering, an accelerator pedal, and a brake pedal for operating the vehicle 100 remotely, and a communication device for making communication with the server 200 through wire communication or wireless communication, for example, and the server 200 may generate a running control signal responsive to the operation on the operating device.

### C-13. Another Embodiment 13

In each of the above-described embodiments, the vehicle 100, 100v is simply required to have a configuration to become movable by unmanned driving. The vehicle 100, 100v may embodied as a platform having the following configuration, for example. The vehicle 100, 100v is simply required to include at least the vehicle control device 110 and the actuator group 120 in order to fulfill three functions including "run," "turn," and "stop" by unmanned driving. In order for the vehicle 100, 100v to acquire information from outside for unmanned driving, the vehicle 100, 100v is simply required to include the communication device 130 further. Specifically, the vehicle 100, 100v to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100, 100v before the vehicle 100, 100v is shipped from the factory FC, or a remaining component such as a bodyshell may be mounted on the vehicle 100, 100v after the vehicle 100, 100v is shipped from the factory FC while the remaining component such as a bodyshell is not mounted on the vehicle 100, 100v. Each of components may be mounted on the vehicle 100, 100v from any orientation such as from above, from below, from the front, from the back, from the right, or from the left. Alternatively, these components may be mounted from the same orientation or from respective different orientations. The location determination for the platform may be performed in the same way as for the vehicle 100, 100v in the first embodiments.

### C-14. Another Embodiment 14

The vehicle 100, 100v may be manufactured by combining a plurality of modules. The module means a unit composed of one or more components grouped according to a configuration or function of the vehicle 100, 100v. For example, a platform of the vehicle 100, 100v may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100, 100v different from the platform may be modularized. Various modules may include an arbitrary exterior component such as a bumper or a grill, or an arbitrary interior component such as a seat or a console. Not only the vehicle 100, 100v but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

### C-15. Another Embodiment 15

A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

### C-16. Another Embodiment 16

In each of the embodiments described above, some or all of the functions and processes that are implemented by software may also be implemented by hardware. Further, some or all of the functions and processes that are implemented by hardware may also be implemented by software. Examples of the hardware used to implement various functions in each of the embodiments described above include various circuits, such as integrated circuits and discrete circuits.

The present disclosure is not limited to the embodiments described above, but can be implemented in a variety of configurations without departing from the spirit of the present disclosure. For example, in order to solve some or all of the aforementioned problems or to achieve some or all of the aforementioned effects, the technical features of the embodiment corresponding to the technical features in each aspect described in the summary can appropriately be substituted or combined. Moreover, unless the technical feature is explained herein as being essential, it can be eliminated as appropriate.

## Claims

1. A control system (50;50v) configured to control a moving object capable of moving by unmanned driving, comprising:
a first generation unit (116;211) configured to use a position and an orientation of the moving object to generate a first candidate for a driving permissible range (DP) permitted for the moving object to move without coming into contact with another object, the position and the orientation used by the first generation unit (116;211) being acquired in a predetermined first acquisition method by using a detection result of a first sensor;
a second generation unit (117;212) configured to use the position and the orientation of the moving object to generate a second candidate for the driving permissible range (DP), the position and the orientation used by the second generation unit (117;212) being acquired in a predetermined second acquisition method by using a detection result of a second sensor; and
a determination unit (118;131) configured to determine an overlapping range between the first candidate and the second candidate as the driving permissible range (DP) and transmit the determined driving permissible range (DP) to a control unit of the moving object, wherein
the first generation unit (116;211) and the second generation unit (117;212) are configured to satisfy at least one of a first condition and a second condition, the first condition being a condition that the first sensor and the second sensor are different sensors, the second condition being a condition that the first acquisition method and the second acquisition method are different acquisition methods.

2. The control system (50;50v) according to claim 1, wherein the first generation unit (116;211) and the second generation unit (117;212) are configured to satisfy both of the first condition and the second condition.

3. The control system (50;50v) according to claim 1, wherein the driving permissible range (DP) is defined by at least one of parameters comprising a steering angle of the moving object at which movement is permitted, a moving speed of the moving object at which the movement is permitted, and a grace period for which the moving object is permitted to continue the movement,
each of the first generation unit (116;211) and the second generation unit (117;212) is configured to generate a candidate for each of the at least one of the parameters, and
the determination unit (118;131) is configured to identify the overlapping range for each of the at least one of the parameters and determine the identified overlapping range as the driving permissible range (DP).

4. The control system (50;50v) according to claim 3, wherein the driving permissible range (DP) is further defined by a traveling category of the moving object, the traveling category indicating forward movement or rearward movement.

5. The control system (50;50v) according to claim 3 or 4, further comprising:
a detection unit (213) configured to detect that another moving object (MO) as the another object has approached the moving object; and
a memory (112;112v;202) storing a map (MP) indicating a movable area of the moving object, the movable area being defined in accordance with a stationary object (SO) as the another object, wherein
each of the first generation unit (116;211) and the second generation unit (117;212) is configured to:
when the detection unit (213) does not detect that the another moving object (MO) has approached the moving object, generate the candidate for the steering angle in accordance with a relative position and a distance between the moving object and the stationary object (SO) which are calculated by using the map (MP); and
when the detection unit (213) detects that the another moving object (MO) has approached the moving object, generate the candidate for the steering angle in accordance with the relative position and the distance between the moving object and the stationary object (SO) which are calculated by using the map (MP), and a relative position and a distance between the moving object and the another moving object (MO) which are calculated by using a detection result of a sensor, the first generation unit (116;211) using the first sensor as the sensor, the second generation unit (117;212) using the second sensor as the sensor.

6. The control system (50;50v) according to claim 3 or 4, further comprising:
a detection unit (213) configured to detect that another moving object (MO) as the another object has approached the moving object; and
a memory (112;112v;202) storing a map (MP) indicating a default value of the moving speed in each area in a movable area of the moving object, the movable area being defined in accordance with a stationary object (SO) as the another object, wherein
each of the first generation unit (116;211) and the second generation unit (117;212) is configured to:
when the detection unit (213) does not detect that the another moving object (MO) has approached the moving object, generate the candidate for the moving speed in which the default value acquired by using the map (MP) is a maximum value, and generate time in accordance with the default value as the candidate for the grace period; and
when the detection unit (213) detects that the another moving object (MO) has approached the moving object, generate the candidate for the moving speed in which a variable value in accordance with a distance between the moving object and the another moving object (MO) is a maximum value, the distance being calculated by using a detection result of a sensor, and generate time in accordance with the variable value as the candidate for the grace period, the first generation unit (116;211) using the first sensor as the sensor, the second generation unit (117;212) using the second sensor as the sensor.

7. The control system (50;50v) according to claim 3 or 4, wherein each of the first generation unit (116;211) and the second generation unit (117;212) is further configured to generate the candidate for at least one of the steering angle, the moving speed, and the grace period in accordance with a size of the moving object.

8. The control system (50;50v) according to claim 4, wherein each of the first generation unit (116;211) and the second generation unit (117;212) is configured to generate the candidate for the traveling category in accordance with a shift position of the moving object.

9. The control system (50;50v) according to claim 3 or 4, further comprising a confirmation unit configured to confirm that the driving permissible range (DP) transmitted from the determination unit (118;131) matches the driving permissible range (DP) received by the control unit.

10. A method for controlling a moving object capable of moving by unmanned driving, comprising:
a first generation step of using a position and an orientation of the moving object to generate a first candidate for a driving permissible range (DP) permitted for the moving object to move without coming into contact with another object, the position and the orientation used in the first generation step being acquired in a predetermined first acquisition method by using a detection result of a first sensor;
a second generation step of using the position and the orientation of the moving object to generate a second candidate for the driving permissible range (DP), the position and the orientation used in the second generation step being acquired in a predetermined second acquisition method by using a detection result of a second sensor; and
a determination step of determining an overlapping range between the first candidate and the second candidate as the driving permissible range (DP) and transmitting the determined driving permissible range (DP) to a control unit of the moving object, wherein
in the first generation step and the second generation step, at least one of a first condition and a second condition is satisfied, the first condition being a condition that the first sensor and the second sensor are different sensors, the second condition being a condition that the first acquisition method and the second acquisition method are different acquisition methods.
